# EUROPEAN PATENT APPLICATION

(11) **EP 4 763 357 A1**
(43) Date of publication of application: **24.06.2026**
(21) Application number: 25827346.5
(22) Date of filing: 19.06.2025
(51) Int. Cl.: B05C 5/02, B05C 11/10, H01M 4/04

(54) **DIE COATER**

(30) Priority: 26.06.2024 KR 20240083238
(71) Applicant: LG Energy Solution, Ltd., Seoul 07335 (KR)
(72) Inventor: KIM, Won Hwi, Daejeon 34122 (KR); KIM, Guk Tae, Daejeon 34122 (KR); PARK, Sang Won, Daejeon 34122 (KR); LIM, Chae Ryeun, Daejeon 34122 (KR); KIM, Sang Min, Daejeon 34122 (KR); MOON, Young Gyu, Daejeon 34122 (KR)
(74) Representative: Plasseraud IP
(86) International application number: PCT/KR2025/008472
(87) International publication number: WO 2026/005381

(57) **Abstract**

According to exemplary embodiments, a die coater is provided. The die coater includes a first die including a manifold; and a shim coupled to the first die, wherein the shim includes a body shim extending in a first direction and a spacer shim extending in a second direction perpendicular to the first direction and dividing the manifold, the spacer shim defines an insulation flow path configured to discharge insulation slurry, the insulation flow path includes an inlet port, a first insulation flow path connected to the inlet port, and a second insulation flow path connecting an outlet port and the first insulation flow path, and the second insulation flow path may have a slope toward the outlet port

## Description

### [Technical Field]

The present disclosure relates to a die coater. Specifically, the present disclosure relates to a die coater including a spacer shim.

This application claims the benefit of priority from Korean Patent Application No. 10-2024-0083238, filed on June 26, 2024, the entire contents disclosed therein are incorporated by reference into this disclosure.

### [Background]

Unlike primary batteries, secondary batteries can be charged and discharged multiple times. Secondary batteries are widely used as energy sources for various wireless devices such as handsets, laptops, wireless vacuum cleaners, etc. Recently, due to energy density improvements and economies of scale, the manufacturing cost per unit capacity of secondary batteries has dramatically decreased, and as the cruising distance of BEVs (battery electric vehicles) has increased to a level equivalent to fuel vehicles, the primary applications of secondary batteries are shifting from mobile devices to mobility.

The electrodes of secondary batteries are the most important components of secondary batteries in terms of energy density. The electrodes of secondary batteries can be formed through a coating process, a roll press process, a drying process, a slitting process, and a notching process. Among them, the coating process is a process of coating a coating material including an active material on an electrode plate, and can be performed by a die coater.

### [Summary]

### [Technical Problem]

The technical problem to be solved by the present disclosure is to provide a die coater with improved coating performance.

### [Technical Solution]

According to exemplary embodiments of the present disclosure to solve the above-described problem, a die coater is provided. The die coater includes a first die including a manifold; and a shim coupled to the first die, wherein the shim includes a body shim extending in a first direction and a spacer shim extending in a second direction perpendicular to the first direction and dividing the manifold, the spacer shim defines an insulation flow path configured to discharge insulation slurry, the insulation flow path includes an inlet port, a first insulation flow path connected to the inlet port, and a second insulation flow path connecting an outlet port and the first insulation flow path, and the second insulation flow path may have a slope toward the outlet port.

The second insulation flow path may include a portion in which a depth decreases as it approaches the outlet port.

The depth of the second insulation flow path may continuously decrease as it approaches the outlet port.

The second insulation flow path may include a portion having a depth different from that of the first insulation flow path.

The depth of the first insulation flow path may be constant.

The second insulation flow path may extend in the second direction.

The width of the second insulation flow path in the first direction may be constant.

The depth of the second insulation flow path may decrease along the second direction as it approaches the outlet port.

A ratio of a minimum depth to a maximum depth of the second insulation flow path may be 50% or more and less than 100%.

A ratio of the depth of the second insulation flow path at the outlet port to the maximum depth of the second insulation flow path may be 60% or more and less than 100%.

The second insulation flow path may include a portion having a constant depth.

The second insulation flow path may include a portion in which a depth decreases discontinuously.

### [Advantageous Effects]

According to exemplary embodiments of the present disclosure, the pressure of the insulation slurry discharged through the insulation flow path of the spacer shim can be increased. When the discharge pressure of the insulation slurry is increased, the thickness of the insulation coating layer formed by coating the insulation slurry can be increased. Accordingly, the thickness of the insulation coating layer can be increased while maintaining the width of the insulation coating layer without reduction.

The technical effects that can be obtained in exemplary embodiments of the present disclosure are not limited to the above-described effects, and other effects not mentioned can be clearly derived and understood by a person skilled in the art from the following description. In other words, unintended effects of implementing the exemplary embodiments of the present disclosure may also be derived from the exemplary embodiments of the present disclosure by a person skilled in the art.

### [Brief Description of the Drawings]

FIG. 1 illustrates secondary battery manufacturing equipment according to exemplary embodiments.
FIG. 2 is a cross-sectional view of a die coater according to exemplary embodiments.
FIG. 3 is an exploded perspective view for explaining a die coater according to exemplary embodiments.
FIG. 4 is an enlarged perspective view of region EX1 of FIG. 3.
FIG. 5 is a plan view illustrating a portion of a spacer shim according to exemplary embodiments.
FIG. 6 is a cross-sectional view taken along line I-I' of FIG. 5.
FIG. 7 is a cross-sectional view taken along line II-II' of FIG. 5.
FIG. 8 is a cross-sectional view taken along line III-III' of FIG. 5.
FIG. 9 is a cross-sectional view taken along line IV-IV' of FIG. 5.
FIG. 10 is a cross-sectional view taken along line V-V' of FIG. 5.
FIG. 11 is a cross-sectional view of a spacer shim according to exemplary embodiments.
FIG. 12 is a cross-sectional view of a spacer shim according to exemplary embodiments.
FIG. 13 is a cross-sectional view of a spacer shim according to exemplary embodiments.
FIG. 14 is a cross-sectional view of a spacer shim according to exemplary embodiments.

### [Detailed Description]

Hereinafter, preferred embodiments of the present disclosure will be described in detail with reference to the accompanying drawings. Prior to this, the terms or words used in the present specification and claims should not be construed as being limited to conventional or dictionary meanings, and should be interpreted as meanings and concepts that conform to the technical idea of the present disclosure based on the principle that the inventors can appropriately define the concept of terms in order to describe their own invention in the best way.

Therefore, it should be understood that the embodiments described in the present specification and the configurations shown in the drawings are merely one most preferred embodiment of the present disclosure and do not represent all of the technical ideas of the present disclosure, so that various equivalents and modifications that may replace them may exist at the time of the present application.

In addition, in describing the present disclosure, when it is determined that a detailed description of a related known configuration or function may obscure the gist of the present disclosure, the detailed description thereof will be omitted.

The embodiments of the present disclosure are provided to more completely describe the present disclosure to those skilled in the art, so the shapes and sizes of components in the drawings may be exaggerated, omitted, or schematically illustrated for clearer explanation. Therefore, the size or ratio of each component does not entirely reflect the actual size or ratio.

### (first embodiment)

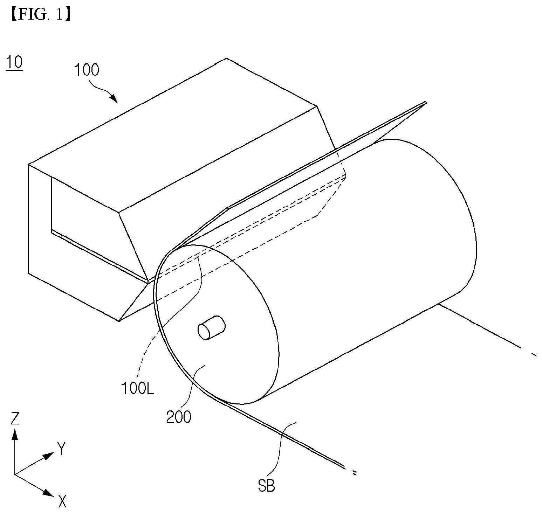

FIG. 1 illustrates secondary battery manufacturing equipment 10 according to exemplary embodiments.

According to exemplary embodiments, the secondary battery manufacturing equipment 10 may include a die coater 100 and rolls 200. The die coater 100 may be configured to discharge a coating material. A portion of the die coater 100 from which the coating material is discharged may be referred to as a lip 100L. According to exemplary embodiments, the die coater 100 may be configured to apply the coating material on a current collector SB. The coating material may include electrode slurry and insulation slurry. The die coater 100 may be configured to simultaneously provide the electrode slurry and the insulation slurry on the current collector SB.

The electrode slurry may be used in manufacturing an electrode of a secondary battery. The electrode slurry may include an electrode active material, a conductive material, a binder, and a solvent. By dissolving the electrode active material, the conductive material, the binder, and the like in the solvent, the electrode slurry may be manufactured. The solvent may disperse the electrode active material and the like. The solvent may be an aqueous solvent or a non-aqueous solvent. The solvent may include any one of dimethyl sulfoxide (DMSO), isopropyl alcohol, N-methylpyrrolidone (NMP), acetone, water, and mixtures thereof. An amount of the solvent used may be determined based on a target viscosity of the electrode slurry. Parameters for determining the amount of the solvent used include a coating thickness of the electrode slurry, manufacturing yield, and workability.

The positive electrode active material is a material capable of causing an electrochemical reaction. The positive electrode active material may be a lithium transition metal oxide. The positive electrode active material may include, for example, layered compounds such as lithium cobalt oxide (LiCoO₂) and lithium nickel oxide (LiNiO₂) substituted with one or more transition metals; lithium manganese oxide substituted with one or more transition metals; lithium nickel-based oxides represented by the chemical formula LiNi_{1-y}M_{y}O₂ (where M is any one of Co, Mn, Al, Cu, Fe, Mg, B, Cr, Zn, and Ga, and 0.01≤y≤0.7); lithium nickel cobalt manganese composite oxides represented by Li_{1+z}Ni_{b}Mn_{c}Co_{1-(b+c+d)}M_{d}O₍₂₋ₑ₎Aₑ (where -0.5≤z≤0.5, 0.1≤b≤0.8, 0.1≤c≤0.8, 0≤d≤0.2, 0≤e≤0.2, b+c+d<1, M is any one of Al, Mg, Cr, Ti, Si, and Y, and A is any one of F, P, and Cl), such as Li_{1+z}Ni_{1/3}Co_{1/3}Mn_{1/3}O₂ and Li_{1+z}Ni_{0.4}Mn_{0.4}Co_{0.2}O₂; and any one of olivine-based lithium metal phosphates represented by the chemical formula Li₁₊ₓM_{1-y}M'_{y}PO_{4-z}X_{z} (where M is a transition metal, more specifically any one of Fe, Mn, Co, and Ni, M' is any one of Al, Mg, and Ti, X is any one of F, S, and N, -0.5≤x≤+0.5, 0≤y≤0.5, and 0≤z≤0.1).

The negative electrode active material may include, for example, carbon such as non-graphitizable carbon and graphite-based carbon. The negative electrode active material may include, for example, metal composite oxides such as LiₓFe₂O₃ (0≤x≤1), LixWO₂ (0≤x≤1), SnₓMe₁₋ₓMe'_{y}O_{z} (where Me is any one of Mn, Fe, Pb, and Ge, Me' is any one of Al, B, P, Si, Group 1, Group 2, Group 3 elements of the periodic table, and halogens; 0<x≤1; 1≤y≤3; and 1≤z≤8). The negative electrode active material may include, for example, any one of lithium metal; lithium alloy; silicon-based alloy; and tin-based alloy. The negative electrode active material may include, for example, metal oxides such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, and Bi₂O₅. The negative electrode active material may also include, for example, conductive polymers such as polyacetylene; Li-Co-Ni based materials, and the like.

The conductive material may have conductivity without causing chemical changes in the finally manufactured secondary battery. The conductive material may include, for example, graphite such as natural graphite or artificial graphite; carbon blacks such as acetylene black, Ketjen black, channel black, furnace black, lamp black, and thermal black; conductive fibers such as carbon fibers or metal fibers; metal powders such as fluorinated carbon, aluminum, and nickel powder; conductive whiskers such as zinc oxide and potassium titanate; conductive metal oxides such as titanium oxide; polyphenylene derivatives, and the like.

The binder may enhance the bonding between the active material and the conductive material and the bonding force to the electrode plate. The binder may include, for example, polyvinylidene fluoride, polyvinyl alcohol, carboxymethyl cellulose (CMC), starch, hydroxypropyl cellulose, regenerated cellulose, polyvinylpyrrolidone, tetrafluoroethylene, polyethylene, polypropylene, ethylene-propylene-diene terpolymer (EPDM), sulfonated EPDM, styrene butadiene rubber, fluorine rubber, various copolymers, and the like.

A thickness of the positive electrode current collector may range from about 3 µm to about 500 µm. The positive electrode current collector may not cause chemical changes in the finally manufactured secondary battery and may have high conductivity. The positive electrode current collector may include, for example, any one of stainless steel, aluminum, nickel, titanium, calcined carbon, and aluminum. The positive electrode current collector may also include stainless steel surface-treated with carbon, nickel, titanium, silver, and the like. The surface of the positive electrode current collector may include an uneven surface structure to enhance adhesion of the active material. The shape of the positive electrode current collector may include any one of film, sheet, foil, net, porous, foam, and non-woven fabric.

A thickness of the negative electrode current collector may range from about 3 µm to about 500 µm. The negative electrode current collector may not cause chemical changes in the finally manufactured secondary battery and may have high conductivity. The negative electrode current collector may include any one of copper, stainless steel, aluminum, nickel, titanium, calcined carbon, and aluminum-cadmium alloy. The negative electrode current collector may also include stainless steel surface-treated with carbon, nickel, titanium, silver, and the like. The surface of the negative electrode current collector may include an uneven surface structure to enhance adhesion of the active material. The shape of the negative electrode current collector may include any one of film, sheet, foil, net, porous, foam, and non-woven fabric.

### (second embodiment)

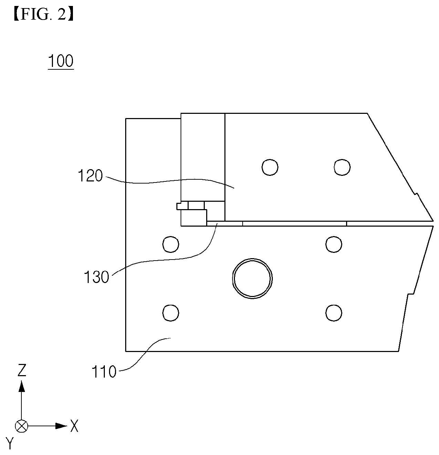

FIG. 2 is a cross-sectional view of a die coater 100 according to exemplary embodiments.

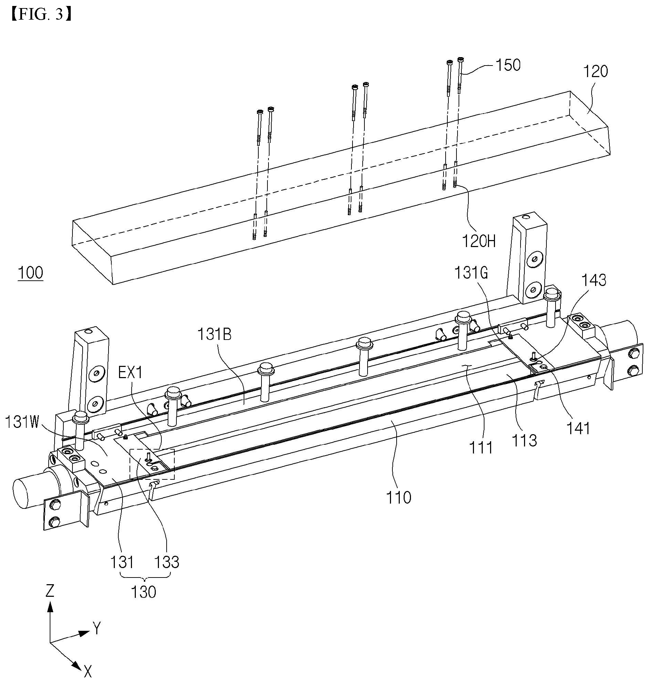

FIG. 3 is an exploded perspective view for explaining a die coater 100 according to exemplary embodiments. In FIG. 3, a second die 120 is omitted.

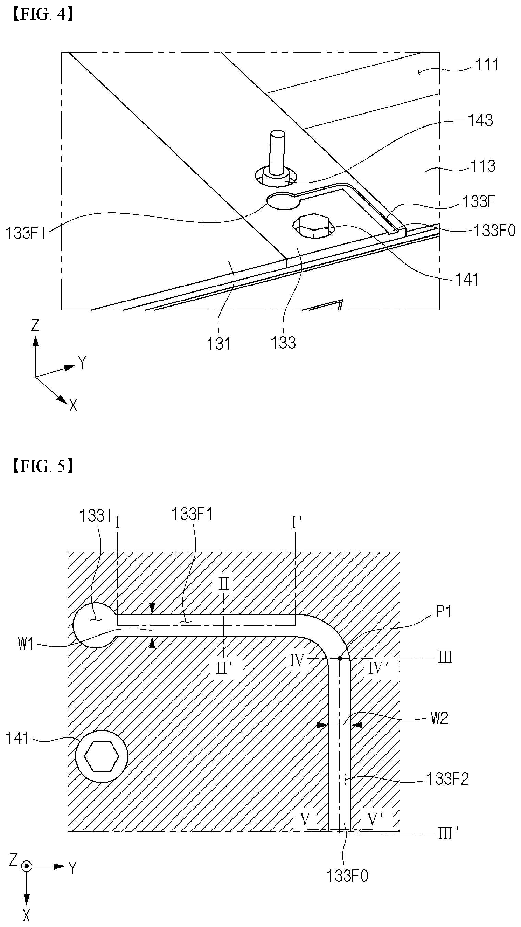

FIG. 4 is an enlarged perspective view of region EX1 of FIG. 3.

Referring to FIGS. 2 to 4, the die coater 100 may include a first die 110, a second die 120, a shim 130, shim holders 141, and shim fixing pins 143.

Hereinafter, as described above, the technical spirit of the present disclosure will be described based on an embodiment in which the first die 110 and the second die 120 are separate elements. A person skilled in the art will be able to easily arrive at an embodiment in which the first die 110 and the second die 120 are integrated to form an integral die based on what is described herein.

The first die 110 may include a manifold 111 and an electrode slurry supply path connected to the manifold 111. The electrode slurry may flow into the manifold 111 through the electrode slurry supply path. The manifold 111 may be an empty space configured to accommodate the electrode slurry. After the electrode slurry fills the manifold 111, the electrode slurry may be discharged to the outside of the die coater 100. The electrode slurry may be discharged to the outside from the manifold 111 through slits defined by the shim 130 and a land part 113.

The manifold 111 may have a well shape having a predetermined depth from the land part 113. The manifold 111 may include an inclined surface, and accordingly, the electrode slurry may be stably discharged from the die coater 100.

The shim 130 may be interposed between the first die 110 and the second die 120. The first die 110 may contact a lower surface of the shim 130. The second die 120 may contact an upper surface of the shim 130. The shim 130 may include a body shim 131 and spacer shims 133.

The body shim 131 may include a body 131B and wings 131W. The body 131B may extend in a Y direction. The body 131B may be a plate having a width in an X direction smaller than a length in the Y direction. Here, the X direction is a direction in which the electrode slurry is discharged, and the Y direction may be substantially perpendicular to the X direction. The body shim 131 may be substantially parallel to each of the X direction and the Y direction, and may be substantially perpendicular to a Z direction. The wings 131W may be connected to ends in the Y direction of the body 131B. The wings 131W may protrude from the body 131B in the X direction.

The body 131B may include a plurality of grooves 131G. Each of the plurality of grooves 131G may be on side that are adjacent to the manifold 111 (e.g., overlapping with the manifold 111) among sides parallel to the Y direction of the body 131B. Each of the plurality of grooves 131G may be recessed inward from the sides parallel to the Y direction of the body 131B.

The plurality of grooves 131G may correspond to a plurality of spacer shims 133. The plurality of grooves 131G may expose portions of the first die 110. The plurality of spacer shims 133 may be partially inserted into corresponding ones of the plurality of grooves 131G. The plurality of spacer shims 133 may be fixed to the portions of the first die 110 exposed by the plurality of grooves 131G through methods such as bolting.

According to exemplary embodiments, a width in the Y direction of each of the plurality of grooves 131G may be different from a width in the Y direction of a corresponding one of the spacer shims 133. According to exemplary embodiments, the width in the Y direction of each of the plurality of grooves 131G may be greater than the width in the Y direction of the corresponding one of the spacer shims 133. Accordingly, the plurality of grooves 131G guide the coupling of the spacer shims 133 and simultaneously provide a degree of freedom in the Y direction to the spacer shims 133, whereby positions of the spacer shims 133 can be precisely adjusted in the Y direction.

The spacer shims 133 may be interposed between the wings 131W in the Y direction. The spacer shims 133 may overlap with the wings 131W in the Y direction.

Referring to FIGS. 2 and 3, according to exemplary embodiments, the spacer shims 133 may be adjacent to edges in the Y direction of the shim 130. According to exemplary embodiments, the spacer shims 133 may be adjacent to the wings 131W. According to exemplary embodiments, the spacer shims 133 may contact the wings 131W, but the present disclosure is not limited thereto. Each of the spacer shims 133 may be referred to as an edge spacer shim.

Each of the spacer shims 133 may include an insulation flow path 133F. The first die 110 may be connected to an insulation slurry supply line, and the insulation slurry that flows through a path in the first die 110 may be introduced into the insulation flow path 133F. The insulation flow path 133F may provide a path for the flow of the insulation slurry. Here, the insulation slurry may be a material having insulation properties and fluidity.

The insulation slurry may be provided on a current collector SB (refer to FIG. 1) through the insulation flow path 133F, and accordingly, the insulation slurry may be provided to cover edges of the electrode slurry discharged from portions of the manifold 111 between the spacer shims 133. According to exemplary embodiments, as the insulation slurry covers the edges of the electrode slurry, an edge profile of the electrode slurry may be improved, and yield and reliability of a secondary battery manufacturing process may be enhanced. Each of the spacer shims 133 may be matched with one slit discharging the electrode slurry, and accordingly, each of the spacer shims 133 may include one insulation flow path 133F.

A person skilled in the art will be able to easily arrive at a die coater configured to form various numbers of retention lanes, such as 1, 2, 8, 16, and 32, based on what is described herein.

As illustrated in FIGS. 2 to 4, the shim holders 141 and the shim fixing pins 143 may be partially inserted into the land part 113 of the first die 110. The shim holders 141 and the shim fixing pins 143 may be configured to fix the spacer shims 133 to the land part 113 of the first die 110.

The shim holders 141 may be, for example, bolts, but the present disclosure is not limited thereto. The shim fixing pins 143 may be, for example, bidirectional pins. Accordingly, the shim fixing pins 143 may be configured to fix the second die 120 with the shim 130 in addition to the first die 110. Each of the spacer shims 133 may include a fastening hole corresponding to the shim holders 141 and the shim fixing pins 143 (i.e., into which the shim holders 141 and the shim fixing pins 143 are inserted and through which the shim holders 141 and the shim fixing pins 143 penetrate).

FIG. 5 is a plan view illustrating a portion of a spacer shim 133 according to exemplary embodiments.

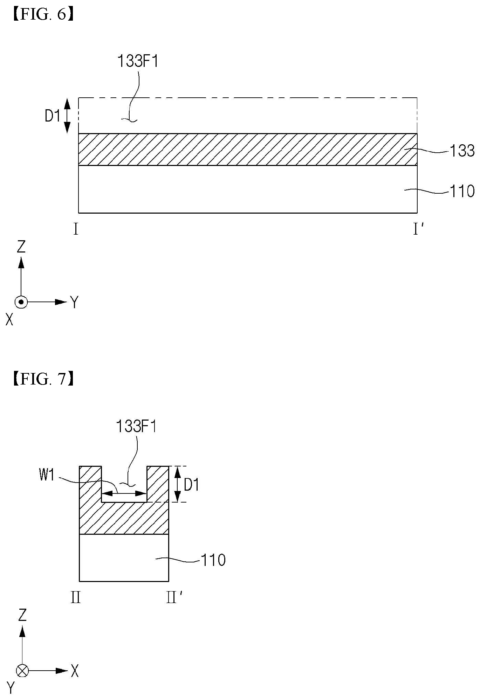

FIG. 6 is a cross-sectional view taken along line I-I' of FIG. 5.

FIG. 7 is a cross-sectional view taken along line II-II' of FIG. 5.

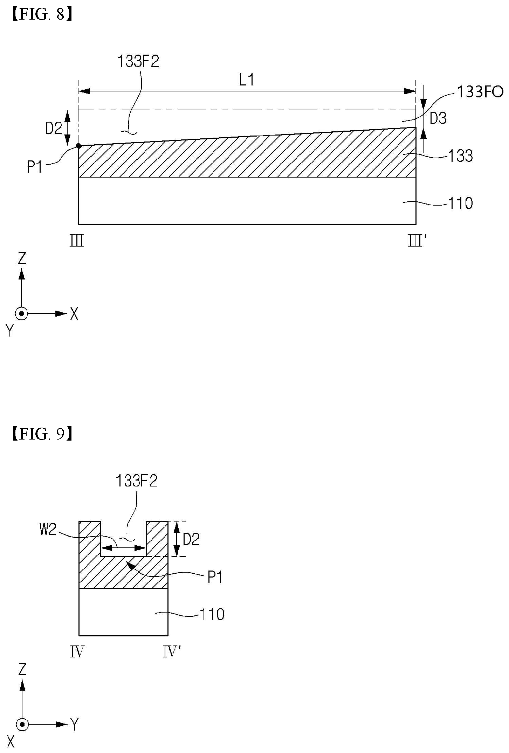

FIG. 8 is a cross-sectional view taken along line III-III' of FIG. 5.

FIG. 9 is a cross-sectional view taken along line IV-IV' of FIG. 5.

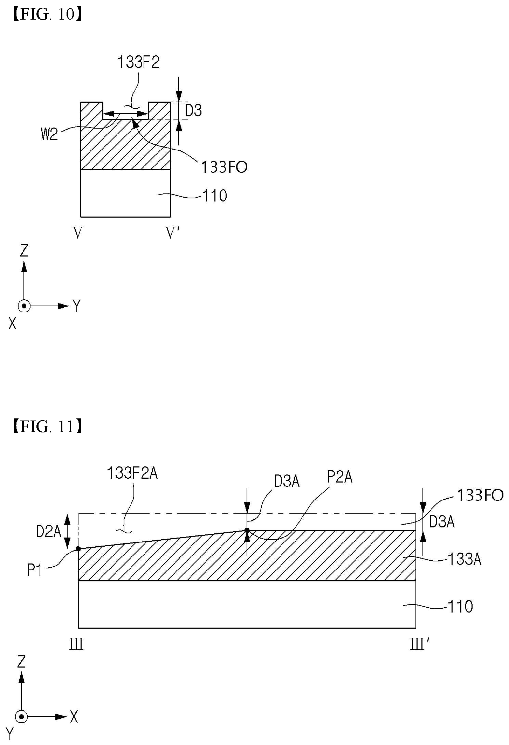

FIG. 10 is a cross-sectional view taken along line V-V' of FIG. 5.

Specifically, FIGS. 6 and 7 are cross-sectional views for explaining a first insulation flow path 133F1 of the spacer shim 133. FIGS. 8 to 10 are cross-sectional views for explaining a second insulation flow path 133F2 of the spacer shim 133.

Referring to FIG. 5, the spacer shim 133 may define an insulation flow path 133F. The insulation flow path 133F may include an inlet port 133I, a first insulation flow path 133F1, and a second insulation flow path 133F2. The insulation flow path 133F may provide a path for discharge of the insulation slurry.

The first insulation flow path 133F1 may include a straight part. The first insulation flow path 133F1 may extend in the Y direction. The first insulation flow path 133F1 may connect the inlet port 133FI and the second insulation flow path 133F2.

The second insulation flow path 133F2 may include a straight part. The second insulation flow path 133F2 may extend in the X direction. The second insulation flow path 133F2 may extend to a lip 100L (refer to FIG. 1) of the die coater 100 (refer to FIG. 1). The insulation slurry may be discharged through the second insulation flow path 133F2. The second insulation flow path 133F2 may be connected to an outlet port 133FO through which the insulation slurry is discharged.

The insulation flow path 133F may further include a connecting part connecting the first insulation flow path 133F1 and the second insulation flow path 133F2. The connecting part may have a curved shape.

The insulation slurry may flow into the insulation flow path 133F through the inlet port 133FI, and then may flow through the first insulation flow path 133F1 and the second insulation flow path 133F2. The insulation slurry that reaches the end of the second insulation flow path 133F2 may be discharged to the outside of the die coater 100 through the outlet port 133FO and coated on the current collector SB.

The inlet port 133FI may include a round shape, and the width of the inlet port 133FI may be greater than widths of the first insulation flow path 133F1 and the second insulation flow path 133F2. The shape of the inlet port 133FI is not limited to what is illustrated.

Hereinafter, the first insulation flow path 133F1 and the second insulation flow path 133F2 will be described with reference to FIGS. 6 to 10 together. Dotted lines in FIGS. 6 and 8 are imaginary lines for visually illustrating shapes of the first insulation flow path 133F1 and the second insulation flow path 133F2.

Referring to FIGS. 5 to 7 together, the first insulation flow path F1 may extend in the Y direction and may have a constant depth in the Z direction along the Y direction. The depth of the first insulation flow path F1 may mean a depth in the Z direction. The depth of the first insulation flow path F1 in the Z direction may be a first depth D1. For example, the first insulation flow path F1 may have a constant first depth D1 along the Y direction.

As illustrated in FIGS. 5 to 7, the first insulation flow path F1 may extend in the Y direction and may have a width in the X direction. The width of the first insulation flow path 133F1 in the X direction may be constant along the Y direction. For example, the first insulation flow path 133F1 may have a constant first width W1 in the X direction.

Referring to FIGS. 5 and 8 to 10 together, the second insulation flow path 133F2 may extend in the X direction and may have a non-constant depth in the Z direction along the X direction. The depth of the second insulation flow path 133F2 may mean a depth in the Z direction. Specifically, the second insulation flow path 133F2 may have a slope as it approaches the outlet port 133FO. For example, the second insulation flow path 133F2 may have a slope along the X direction. For example, the second insulation flow path 133F2 may have a slope as it approaches the outlet port 133FO along the X direction from a first point P1 where the straight part starts.

In embodiments, the second insulation flow path 133F2 may include a portion in which a depth in the Z direction decreases as it approaches the outlet port 133FO. For example, the second insulation flow path 133F2 may include a portion in which the depth in the Z direction continuously decreases as it approaches the outlet port 133FO. For example, the second insulation flow path 133F2 may include a portion in which the depth in the Z direction continuously decreases from the first point P1 as it approaches the outlet port 133FO.

In embodiments, the depth of the second insulation flow path 133F2 in the Z direction may decrease along the X direction. For example, the depth of the second insulation flow path 133F2 in the Z direction may continuously decrease as it approaches the outlet port 133FO along the X direction. For example, the depth of the second insulation flow path 133F2 in the Z direction may continuously decrease from the first point P1 as it approaches the outlet port 133FO along the X direction.

The second insulation flow path 133F2 may have a second depth D2 at the first point P1 spaced apart from the outlet port 133FO, and may have a third depth D3 at the outlet port 133FO. For example, the depth of the second insulation flow path 133F2 in the Z direction may decrease along the X direction, and thus may have the second depth D2, which is a maximum depth, at the first point P1, and may have the third depth D3, which is a minimum depth, at the outlet port 133FO. For example, the depth of the second insulation flow path 133F2 in the Z direction may continuously decrease from the second depth D2 to the third depth D3 along the X direction.

A ratio of a minimum depth to a maximum depth of the second insulation flow path 133F2 may be about 50% or more. For example, the second insulation flow path 133F2 may have the second depth D2, which is the maximum depth, at the first point P1, and may have the third depth D3, which is the minimum depth, at the outlet port 133FO, and a ratio of the third depth D3 to the second depth D2 may be about 50% or more. Since the third depth D3 is smaller than the second depth D2, of course the ratio of the third depth D3 to the second depth D2 is less than 100%.

For example, when the second depth D2 is 0.5 mm, the third depth D3 may be 0.3 mm. In this case, the ratio of the minimum depth to the maximum depth of the second insulation flow path 133F2 may be about 60%.

For example, when the second depth D2 is 1 mm, the third depth D3 may be 0.5 mm. In this case, the ratio of the minimum depth to the maximum depth of the second insulation flow path 133F2 may be about 50%.

The slope of the second insulation flow path 133F2 may be less than about 2%. The slope of the second insulation flow path 133F2 may mean a ratio of a height difference between a starting point and an ending point of the straight part of the second insulation flow path 133F2 (e.g., a difference between the second depth D2 and the third depth D3) to a length of the straight part of the second insulation flow path 133F2 (e.g., a first length L1).

For example, when the first length L1 is about 26 mm, the second depth D2 is 0.5 mm, and the third depth D3 is 0.3 mm, the slope of the second insulation flow path 133F2 may be about 0.7%.

As illustrated in FIGS. 5 and 8 to 10, the second insulation flow path 133F2 may extend in the X direction and may have a width in the Y direction. The width of the second insulation flow path 133F2 in the Y direction may be constant along the X direction. For example, the second insulation flow path 133F2 may have a constant second width W2 in the Y direction.

As described above, the depth of the first insulation flow path 133F1 in the Z direction is constant at the first depth D1, whereas the depth of the second insulation flow path 133F2 in the Z direction may not be constant. The depth of the second insulation flow path 133F2 in the Z direction may be different from the depth of the first insulation flow path 133F1 in the Z direction. The depth of the second insulation flow path 133F2 in the Z direction may include at least a portion different from the depth of the first insulation flow path 133F1 in the Z direction. In some embodiments, a maximum depth of the second insulation flow path 133F2 (e.g., the second depth D2) may be the same as the first depth D1 of the first insulation flow path 133F1. In some other embodiments, the maximum depth of the second insulation flow path 133F2 (e.g., the second depth D2) may be different from the first depth D1 of the first insulation flow path 133F1.

In some embodiments, the first width W1 of the first insulation flow path 133F1 and the second width W2 of the second insulation flow path 133F2 may be different. In some other embodiments, the first width W1 and the second width W2 may be the same.

According to embodiments according to the technical spirit of the present disclosure, the die coater 100 may include the spacer shim 133, and the spacer shim 133 may include the second flow path 133F2 in which a depth in the Z direction decreases toward the outlet port 133FO. When the depth of the second flow path 133F2 connected to the outlet port 133FO decreases, the discharge pressure of the insulation slurry discharged through the outlet port 133FO may increase. When the discharge pressure of the insulation slurry increases, a thickness (e.g., a thickness in the Z direction) of an insulation coating layer formed by coating the insulation slurry may increase. In particular, a width (e.g., a width in the Y direction) of the second flow path 133F2 of the spacer shim 133 according to embodiments of the present disclosure may be maintained constant while the depth in the Z direction may decrease, whereby the thickness of the insulation coating layer may be increased while maintaining the width of the insulation coating layer coated on the current collector SB (FIG. 1) without reduction.

### (third embodiment)

FIG. 11 is a cross-sectional view of a spacer shim 133A according to exemplary embodiments. Specifically, FIG. 11 is a cross-sectional view corresponding to a cross-section taken along line III-III' of FIG. 5. Hereinafter, differences from the spacer shim 133 described with reference to FIGS. 5 to 10 will be mainly described.

Referring to FIGS. 5 and 11 together, the spacer shim 133A may define an insulation flow path 133F. The insulation flow path 133F may include an inlet port 133I, a first insulation flow path 133F1, and a second insulation flow path 133F2A. The inlet port 133I and the first insulation flow path 133F1 of the spacer shim 133A may be substantially the same as the inlet port 133I and the first insulation flow path 133F1 of the spacer shim 133.

The second insulation flow path 133F2A may include a straight part. The second insulation flow path 133F2 may extend in an X direction. The second insulation flow path 133F2A may be connected to an outlet port 133FO through which insulation slurry is discharged.

The second insulation flow path 133F2A may extend in the X direction and may have a non-constant depth in a Z direction along the X direction. Specifically, the second insulation flow path 133F2A may include a portion having a slope as it approaches the outlet port 133FO. For example, the second insulation flow path 133F2A may include a portion having a slope along the X direction. For example, the second insulation flow path 133F2A may include a portion having a slope from a first point P1 as it approaches the outlet port 133FO along the X direction.

The second insulation flow path 133F2A may include a portion in which a depth in the Z direction decreases as it approaches the outlet port 133FO. For example, the second insulation flow path 133F2A may include a portion in which the depth in the Z direction continuously decreases as it approaches the outlet port 133FO. For example, the second insulation flow path 133F2A may include a portion in which the depth in the Z direction continuously decreases from the first point P1 to a second point P2A as it approaches the outlet port 133FO.

In embodiments, the second insulation flow path 133F2A may have a depth in the Z direction that decreases along the X direction and then has a constant depth in the Z direction. For example, the second insulation flow path 133F2A may have a second depth D2A at the first point P1 spaced apart from the outlet port 133FO, and may have a third depth D3A at the outlet port 133FO. In this case, the depth of the second insulation flow path 133F2A may decrease from the second depth D2A to the third depth D3A from the first point P1 to the second point P2A, and then may be maintained constant at the third depth D3A from the second point P2A to the outlet port 133FO.

The second insulation flow path 133F2A may have a second depth D2A, which is a maximum depth, at the first point P1, and may have a third depth D3A, which is a minimum depth, from the second point P2A to the outlet port 133FO. For example, the second insulation flow path 133F2A may include a portion in which the depth in the Z direction continuously decreases from the second depth D2A to the third depth D3A along the X direction from the first point P1 to the second point P2A.

A ratio of a minimum depth to a maximum depth of the second insulation flow path 133F2A may be about 50% or more. For example, the second insulation flow path 133F2A may have the second depth D2A, which is the maximum depth, at the first point P1, and may have the third depth D3A, which is the minimum depth, at the outlet port 133FO, and a ratio of the third depth D3A to the second depth D2A may be about 50% or more. Since the third depth D3A is smaller than the second depth D2A, of course the ratio of the third depth D3A to the second depth D2A is less than 100%.

### (fourth embodiment)

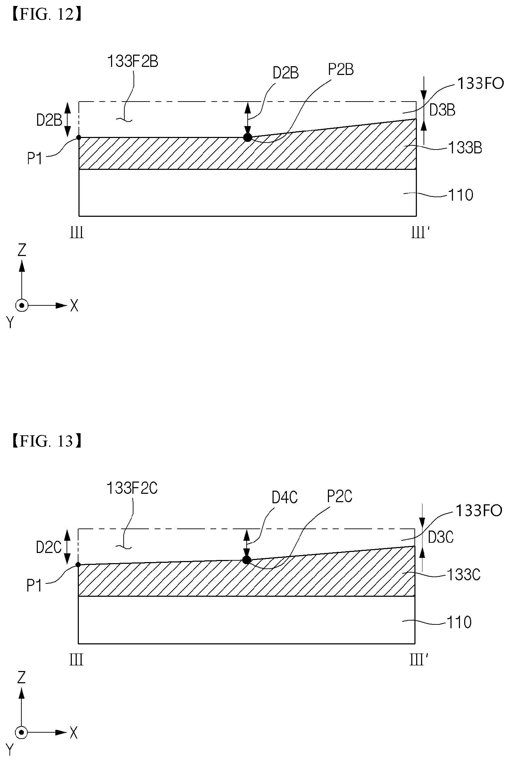

FIG. 12 is a cross-sectional view of a spacer shim 133B according to exemplary embodiments. Specifically, FIG. 12 is a cross-sectional view corresponding to a cross-section taken along line III-III' of FIG. 5. Hereinafter, differences from the spacer shim 133 described with reference to FIGS. 5 to 10 will be mainly described.

Referring to FIGS. 5 and 12 together, the spacer shim 133B may define an insulation flow path 133F. The insulation flow path 133F may include an inlet port 133I, a first insulation flow path 133F1, and a second insulation flow path 133F2B. The inlet port 133I and the first insulation flow path 133F1 of the spacer shim 133B may be substantially the same as the inlet port 133I and the first insulation flow path 133F1 of the spacer shim 133.

The second insulation flow path 133F2B may include a straight part. The second insulation flow path 133F2 may extend in an X direction. The second insulation flow path 133F2B may be connected to an outlet port 133FO through which insulation slurry is discharged.

The second insulation flow path 133F2B may extend in the X direction and may have a non-constant depth in a Z direction along the X direction. Specifically, the second insulation flow path 133F2B may include a portion having a slope as it approaches the outlet port 133FO. For example, the second insulation flow path 133F2B may include a portion having a slope along the X direction. For example, the second insulation flow path 133F2B may include a portion having a slope as it approaches the outlet port 133FO along the X direction.

The second insulation flow path 133F2B may include a portion in which a depth in the Z direction decreases as it approaches the outlet port 133FO. For example, the second insulation flow path 133F2B may include a portion in which the depth in the Z direction continuously decreases as it approaches the outlet port 133FO. For example, the second insulation flow path 133F2B may include a portion in which the depth in the Z direction continuously decreases from a first point P1 to a second point P2B as it approaches the outlet port 133FO.

In embodiments, the second insulation flow path 133F2B may have a constant depth in the Z direction along the X direction, and then the depth in the Z direction may decrease. For example, the second insulation flow path 133F2B may have a second depth D2B at the first point P1 spaced apart from the outlet port 133FO, and may have a third depth D3B at the outlet port 133FO. In this case, the depth of the second insulation flow path 133F2B may be maintained constant at the second depth D2B from the first point P1 to the second point P2B, and then may decrease from the second depth D2B to the third depth D3B from the second point P2B to the outlet port 133FO.

For example, the second insulation flow path 133F2B may have a second depth D2B, which is a maximum depth, from the first point P1 to the second point P2B, and may have a third depth D3B, which is a minimum depth, at the outlet port 133FO. For example, the second insulation flow path 133F2B may include a portion in which the depth in the Z direction continuously decreases from the second depth D2B to the third depth D3B along the X direction from the second point P2B to the outlet port 133FO.

A ratio of a minimum depth to a maximum depth of the second insulation flow path 133F2B may be about 50% or more. For example, the second insulation flow path 133F2B may have the second depth D2B, which is the maximum depth, at the first point P1, and may have the third depth D3B, which is the minimum depth, at the outlet port 133FO, and a ratio of the third depth D3B to the second depth D2B may be about 50% or more. Since the third depth D3B is smaller than the second depth D2B, of course the ratio of the third depth D3B to the second depth D2B is less than 100%.

### (fifth embodiment)

FIG. 13 is a cross-sectional view of a spacer shim 133C according to exemplary embodiments. Specifically, FIG. 13 is a cross-sectional view corresponding to a cross-section taken along line III-III' of FIG. 5. Hereinafter, differences from the spacer shim 133 described with reference to FIGS. 5 to 10 will be mainly described.

Referring to FIGS. 5 and 13 together, the spacer shim 133C may define an insulation flow path 133F. The insulation flow path 133F may include an inlet port 133I, a first insulation flow path 133F1, and a second insulation flow path 133F2C. The inlet port 133I and the first insulation flow path 133F1 of the spacer shim 133C may be substantially the same as the inlet port 133I and the first insulation flow path 133F1 of the spacer shim 133.

The second insulation flow path 133F2C may include a straight part. The second insulation flow path 133F2 may extend in an X direction. The second insulation flow path 133F2C may be connected to an outlet port 133FO through which insulation slurry is discharged.

The second insulation flow path 133F2C may extend in the X direction and may have a non-constant depth in a Z direction along the X direction. Specifically, the second insulation flow path 133F2C may include a portion having a slope as it approaches the outlet port 133FO. For example, the second insulation flow path 133F2C may include a portion having a slope along the X direction. For example, the second insulation flow path 133F2C may include a portion having a slope from a first point P1 as it approaches the outlet port 133FO along the X direction.

The second insulation flow path 133F2C may include a portion in which a depth in the Z direction decreases as it approaches the outlet port 133FO. For example, the second insulation flow path 133F2C may include a portion in which the depth in the Z direction continuously decreases as it approaches the outlet port 133FO. For example, the second insulation flow path 133F2C may include a portion in which the depth in the Z direction continuously decreases from the first point P1 to a second point P2C and from the second point P2C to the outlet port 133FO as it approaches the outlet port 133FO. For example, the second insulation flow path 133F2C may continuously decrease in the depth in the Z direction from a second depth D2C to a fourth depth D4C along the X direction from the first point P1 to the second point P2C, and then may continuously decrease from the fourth depth D4C to a third depth D3C from the second point P2C to the outlet port 133FO.

In embodiments, the second insulation flow path 133F2C may include a portion in which the depth in the Z direction decreases discontinuously along the X direction. For example, the second insulation flow path 133F2C may include a portion in which the depth in the Z direction decreases discontinuously at the second point P2C.

In this case, the depth of the second insulation flow path 133F2C may decrease from the second depth D2C to the fourth depth D4C, and then may decrease from the fourth depth D4C to the third depth D3C. In this case, a degree of decrease from the second depth D2C to the fourth depth D4C may be different from a degree of decrease from the fourth depth D4C to the third depth D3C. In other words, the depth in the Z direction of the second insulation flow path 133F2C may not decrease uniformly throughout an entire section, but decreases non-uniformly at the second point P2C. For example, the degree of decrease in the depth in the Z direction from the first point P1 to the second point P2C may be smaller than the degree of decrease from the second point P2C to the outlet port 133FO. In other words, the degree of depth decreases in the Z direction relative to a distance in the X direction from the first point P1 to the second point P2C may be different from the degree of depth decrease in the Z direction relative to a distance in the X direction from the second point P2C to the outlet port 133FO. For example, the degree of depth decreases in the Z direction relative to the distance in the X direction from the first point P1 to the second point P2C may be smaller than the degree of depth decreases in the Z direction relative to the distance in the X direction from the second point P2C to the outlet port 133FO.

The second insulation flow path 133F2C may have a second depth D2C, which is a maximum depth, at the first point P1, and may have a third depth D3C, which is a minimum depth, at the outlet port 133FO.

### (sixth embodiment)

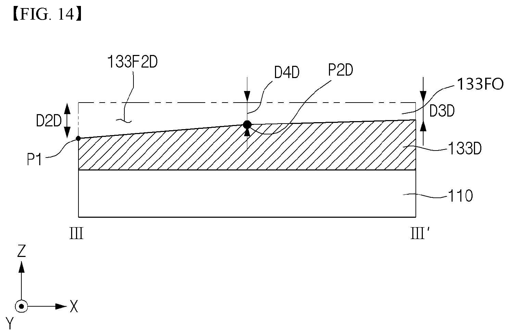

FIG. 14 is a cross-sectional view of a spacer shim 133D according to exemplary embodiments. Specifically, FIG. 14 is a cross-sectional view corresponding to a cross-section taken along line III-III' of FIG. 5. Hereinafter, differences from the spacer shim 133 described with reference to FIGS. 5 to 10 will be mainly described.

Referring to FIGS. 5 and 14 together, the spacer shim 133D may define an insulation flow path 133F. The insulation flow path 133F may include an inlet port 133I, a first insulation flow path 133F1, and a second insulation flow path 133F2D. The inlet port 133I and the first insulation flow path 133F1 of the spacer shim 133D may be substantially the same as the inlet port 133I and the first insulation flow path 133F1 of the spacer shim 133.

The second insulation flow path 133F2D may include a straight part. The second insulation flow path 133F2 may extend in an X direction. The second insulation flow path 133F2D may be connected to an outlet port 133FO through which insulation slurry is discharged.

The second insulation flow path 133F2D may extend in the X direction and may have a non-constant depth in a Z direction along the X direction. Specifically, the second insulation flow path 133F2D may include a portion having a slope as it approaches the outlet port 133FO. For example, the second insulation flow path 133F2D may include a portion having a slope along the X direction. For example, the second insulation flow path 133F2D may include a portion having a slope from a first point P1 as it approaches the outlet port 133FO along the X direction.

The second insulation flow path 133F2D may include a portion in which a depth in the Z direction decreases as it approaches the outlet port 133FO. For example, the second insulation flow path 133F2D may include a portion in which the depth in the Z direction continuously decreases as it approaches the outlet port 133FO. For example, the second insulation flow path 133F2D may include a portion in which the depth in the Z direction continuously decreases from the first point P1 to a second point P2D and from the second point P2D to the outlet port 133FO as it approaches the outlet port 133FO. For example, the second insulation flow path 133F2D may continuously decrease in the depth in the Z direction from a second depth D2D to a fourth depth D4D along the X direction from the first point P1 to the second point P2D, and then may continuously decrease from the fourth depth D4D to a third depth D3D from the second point P2D to the outlet port 133FO.

In embodiments, the second insulation flow path 133F2D may include a portion in which the depth in the Z direction decreases discontinuously along the X direction. For example, the second insulation flow path 133F2D may include a portion in which the depth in the Z direction decreases discontinuously at the second point P2D.

In this case, the depth of the second insulation flow path 133F2D may decrease from the second depth D2D to the fourth depth D4D, and then may decrease from the fourth depth D4D to the third depth D3D. In this case, a degree of decrease from the second depth D2D to the fourth depth D4D may be different from a degree of decrease from the fourth depth D4D to the third depth D3D. In other words, the depth in the Z direction of the second insulation flow path 133F2D may not decrease uniformly throughout an entire section, but decreases non-uniformly at the second point P2D. For example, the degree of decrease in the depth in the Z direction from the first point P1 to the second point P2D may be greater than the degree of decrease from the second point P2D to the outlet port 133FO. In other words, the degree of depth decreases in the Z direction relative to a distance in the X direction from the first point P1 to the second point P2D may be different from the degree of depth decrease in the Z direction relative to a distance in the X direction from the second point P2D to the outlet port 133FO. For example, the degree of depth decreases in the Z direction relative to the distance in the X direction from the first point P1 to the second point P2D may be greater than the degree of depth decreases in the Z direction relative to the distance in the X direction from the second point P2D to the outlet port 133FO.

The second insulation flow path 133F2D may have a second depth D2D, which is a maximum depth, at the first point P1, and may have a third depth D3D, which is a minimum depth, at the outlet port 133FO.

As described above, the present disclosure has been described in more detail through drawings and embodiments. However, it should be understood that the configurations described in the drawings or the embodiments described in the present specification are merely one embodiment of the present disclosure and do not represent all of the technical ideas of the present disclosure, so various equivalents and modifications may exist that can substitute for these at the time of filing the present application.

## Claims

1. A die coater comprising:
a first die comprising a manifold; and
a shim coupled to the first die,
wherein the shim comprises a body shim extending in a first direction and a spacer shim extending in a second direction perpendicular to the first direction and dividing the manifold,
the spacer shim defines an insulation flow path configured to discharge insulation slurry,
the insulation flow path comprises an inlet port, a first insulation flow path connected to the inlet port, and a second insulation flow path connecting an outlet port and the first insulation flow path, and
the second insulation flow path has a slope toward the outlet port.

2. The die coater of claim 1, wherein the second insulation flow path comprises a portion in which a depth decreases as it approaches the outlet port.

3. The die coater of claim 2, wherein the depth of the second insulation flow path continuously decreases as it approaches the outlet port.

4. The die coater of claim 1, wherein the second insulation flow path comprises a portion having a depth different from that of the first insulation flow path.

5. The die coater of claim 4, wherein the depth of the first insulation flow path is constant.

6. The die coater of claim 1, wherein the second insulation flow path extends in the second direction.

7. The die coater of claim 6, wherein the width of the second insulation flow path in the first direction is constant.

8. The die coater of claim 6, wherein the depth of the second insulation flow path decreases along the second direction as it approaches the outlet port.

9. The die coater of claim 1, wherein a ratio of a minimum depth to a maximum depth of the second insulation flow path is 50% or more and less than 100%.

10. The die coater of claim 9, wherein a ratio of the depth of the second insulation flow path at the outlet port to the maximum depth of the second insulation flow path is 60% or more and less than 100%.

11. The die coater of claim 1, wherein the second insulation flow path comprises a portion having a constant depth.

12. The die coater of claim 1, wherein the second insulation flow path comprises a portion in which a depth decreases discontinuously.
